**Europäisches Patentamt**

**European Patent Office**

**Office européen des brevets**

(19)

(11) **EP 1 061 661 A2**

(12) **EUROPEAN PATENT APPLICATION**

(43) Date of publication:
20.12.2000 Bulletin 2000/51

(51) Int. Cl.⁷: **H04B 1/40**, H04Q 7/32

(21) Application number: **00304406.2**

(22) Date of filing: **24.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.06.1999 US 334551**

(71) Applicant:
**NOKIA MOBILE PHONES LTD.
02150 Espoo (FI)**

(72) Inventor: **Salminen, Vesa-Matti
90500 Oulu (FI)**

(74) Representative:
**Read, Matthew Charles et al
Venner Shipley & Co.
20 Little Britain
London EC1A 7DH (GB)**

(54) **Dual band cellular transceiver architecture**

(57) A dual band mobile station is constructed to include a receiver path and a transmitter path. The receiver path includes, for a lower frequency band of operation, a receive filter followed by first and second lower frequency band downconversion mixers, and for a higher frequency band of operation, a first down conversion mixer producing a first intermediate frequency (IF), followed by a first IF filter and second and third downconversion mixers. The lower frequency band receive filter operates as the first IF filter when operating in the upper frequency band, and the first and second lower frequency band downconversion mixers operate as the second and third downconversion mixers. The transmitter path includes, for the lower frequency transmit band of operation, a first upconversion mixer followed by a lower frequency band transmit filter and a lower frequency band power amplifier. For the higher frequency transmit band of operation, the lower frequency band transmit filter operates as an IF filter, and the transmitter path further includes a second upconversion mixer that has an output coupled to a higher frequency band transmit filter followed by a higher frequency band power amplifier. A single tuneable voltage controlled oscillator (VCO) is provided and is fed from a fixed frequency master oscillator. An output of the VCO, when operating in the higher frequency band, is fed to both the first down conversion mixer and to the following second downconversion mixer, and is also fed to both of the first upconversion mixer and to the second upconversion mixer.

EP 1 061 661 A2

**Description**

<u>FIELD OF THE INVENTION:</u>

This invention relates generally to radiotelephones and, in particular, to radiotelephones or mobile stations such as those capable of operation with a cellular network.

<u>BACKGROUND OF THE INVENTION:</u>

The demand for so called dual mode terminals or mobile stations is expected to increase with time. In the United States of America there is presently at least one system which supports dual mode operation, i.e., digital time division multiple access (TDMA) and analog frequency modulation (FM), also referred to as DAMPS. As other systems such as GSM, PCS, DECT, DCS1900 and TDMA1900 become more widely used there is expected to be a need to have mobile stations which support two modes of operation, such as GSM and DCS1900 or DAMPS and TDMA 1900 or DCS1900. A proposed third generation mobile telecommunication systems, such as UMTS (in ETSI), is under development. These advanced systems may also require some type of dual mode operation.

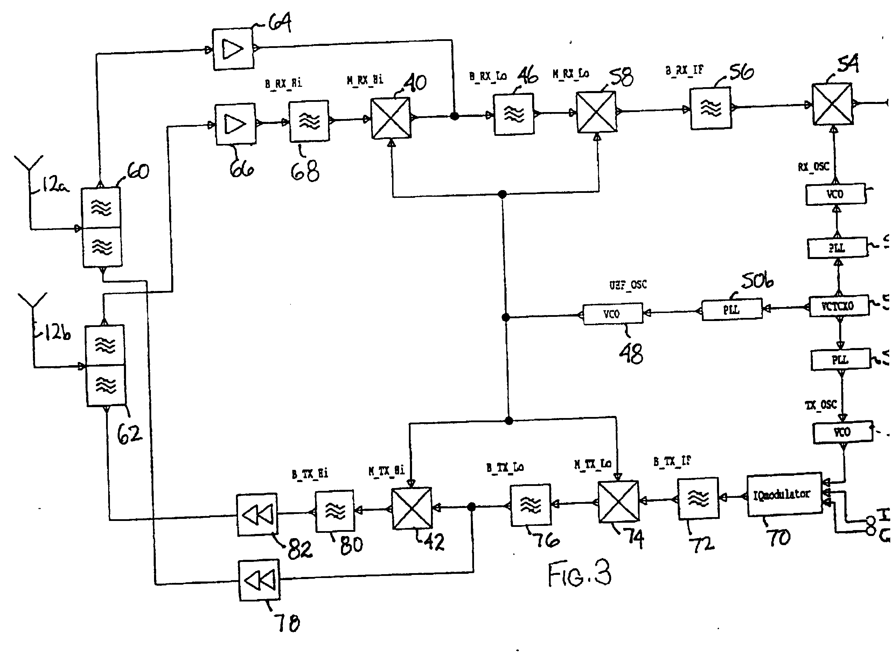

In an article entitled "GSM and DECT-A Dual Mode Solution", Mobile Communications International 21, April 1995, pgs. 57-60, B. Rashidzadel et al. describe an RF subsystem in Figure 3 for a dual mode handset that operates in the GSM frequency band (890-960 MHz) and the DECT frequency band (1880-1900 MHz). In the transmitter portion a single I/Q modulator provides direct modulation at either the DECT or GSM frequency bands, and is connected through a SPDT switch to one of a DECT or a GSM transmitter chain. In the receiver portion separate DECT and GSM low noise amplifiers (LNAs) are used.

During the use of dual band mobile stations an important consideration is a careful design that eliminates a duplication of circuits and components where possible. That is, it is preferred to reuse circuits and components when possible to reduce weight, volume requirements, power requirements and cost.

<u>OBJECTS OF THE INVENTION:</u>

It is thus a first object of this invention to provide an improved dual band mobile station that makes effective dual use of certain RF components and circuits.

It is a further object of this invention to provide a dual band mobile station wherein the higher frequency or upper band circuitry is implemented as an add-on to the lower band circuitry, and which parallels a first portion of the lower band circuitry and which furthermore shares a second portion of the lower band circuitry.

<u>SUMMARY OF THE INVENTION</u>

The foregoing and other problems are overcome and the objects of the invention are realized by methods and apparatus in accordance with embodiments of this invention.

A dual band mobile station is constructed to include a receiver path and a transmitter path. The receiver path includes, for a lower frequency band of operation, a receive filter followed by first and second lower frequency band downconversion mixers, and for a higher frequency band of operation, a first down conversion mixer producing a first intermediate frequency (IF), followed by a first IF filter and second and third downconversion mixers. The lower frequency band receive filter operates as the first IF filter when operating in the upper frequency band, and the first and second lower frequency band downconversion mixers operate as the second and third downconversion mixers. The transmitter path includes, for the lower frequency transmit band of operation, a first upconversion mixer followed by a lower frequency band transmit filter and a lower frequency band power amplifier. For the higher frequency transmit band of operation, the lower frequency band transmit filter operates as an IF filter, and the transmitter path further includes a second upconversion mixer that has an output coupled to a higher frequency band transmit filter followed by a higher frequency band power amplifier.

A single tuneable voltage controlled oscillator (VCO) is provided and is fed from a fixed frequency master oscillator. An output of the VCO, when operating in the higher frequency band, is fed to both the first down conversion mixer and to the following second downconversion mixer, and is also fed to both of the first upconversion mixer and to the second upconversion mixer.

When operating in the lower frequency band the VCO operates at a frequency $RX \pm RXIF$, i.e., the frequency of the channel being received plus/minus the receiver IF frequency, while in higher frequency band operation the VCO operates at $(RX \pm RXIF)/2$. The actual upper band VCO frequency doubling by the receiver mixers means that implies that the primary frequency synthesizer is tuned by the channel spacing divided by two. The frequencies of the transmit and receive IFs are selected to support full duplex operation, if necessary. In this case $\pm RXIF \pm TXIF$ is equal to the duplex channel spacing.

<u>BRIEF DESCRIPTION OF THE DRAWINGS</u>

The above set forth and other features of the invention are made more apparent in the ensuing Detailed Description of the Invention when read in conjunction with the attached Drawings, wherein:

Fig. 1 is a block diagram of a mobile station having a dual band transceiver that is constructed and operated in accordance with this invention;

Fig. 2 is an elevational view of the mobile station shown in Fig. 1, and which further illustrates a plurality of wireless communication systems to which the mobile station can be bidirectionally coupled through wireless RF links;

Fig. 3 illustrates a simplified schematic diagram of the dual band transceiver in accordance with the teachings of this invention;

Fig. 4 is a schematic diagram of an embodiment of a digital AMPS (DAMPS)/TDMA1900 dual band transceiver;

Fig. 5 is a schematic diagram of a second embodiment of the DAMPS/TDMA1900 dual band transceiver; and

Fig. 6 is a schematic diagram of an AMPS/DCS1900 dual band transceiver embodiment of this invention.

DETAILED DESCRIPTION OF THE INVENTION

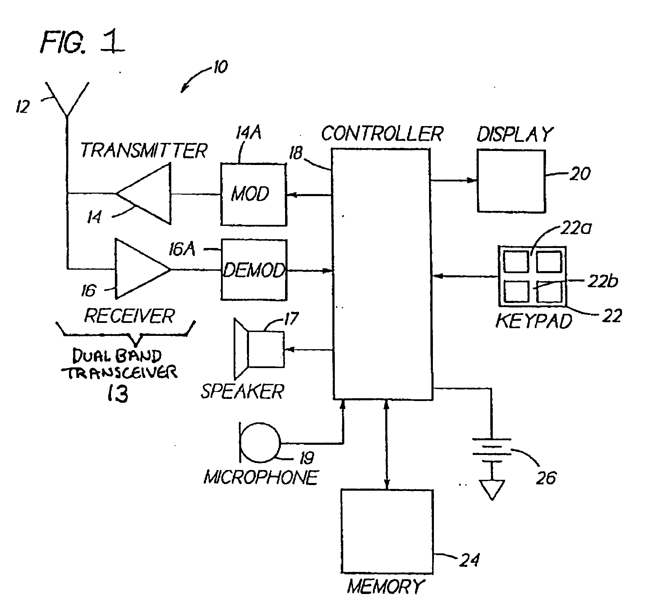

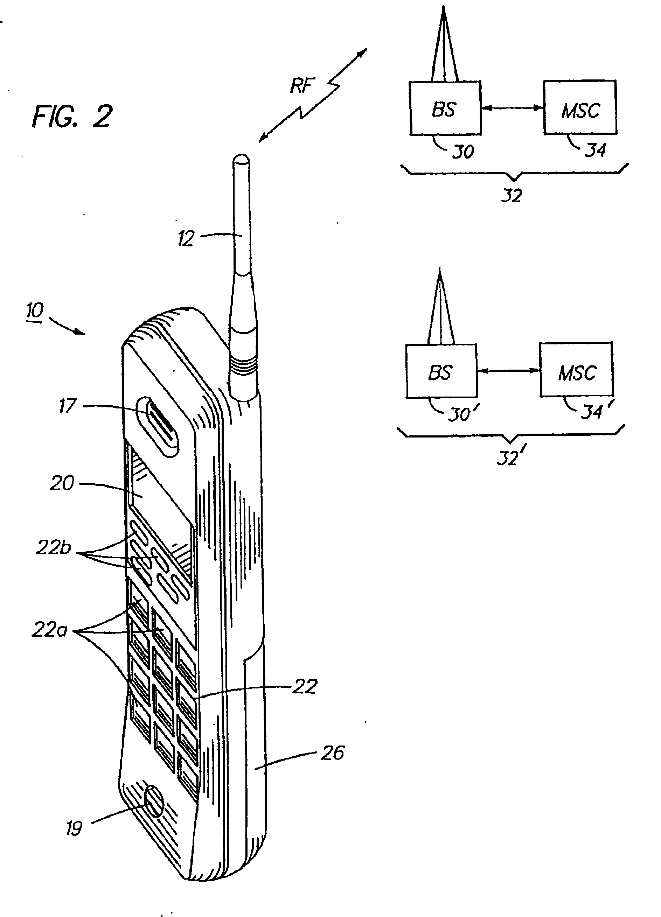

Reference is first made to Figs. 1 and 2 for illustrating a wireless user terminal or mobile station 10, such as but not limited to a cellular radiotelephone or a personal communicator, that is suitable for practicing this invention. The mobile station 10 can be a vehicle mounted or a handheld device. The mobile station 10 includes at least one antenna 12 for transmitting signals to and for receiving signals from a first base site or base station 30. The base station 30 is a part of a first radio telecommunications system 32 that includes a mobile switching center (MSC) 34. The MSC 34 provides a connection to landline trunks when the mobile station 10 is involved in a call.

Fig. 2 also shows a second radio telecommunications system 32' having associated base station(s) 30' and another MSC 32'. By example, the system 32 may be associated with a first network (e.g., a digital TDMA network such as IS-136 or GSM), and system 32' may be associated with a second network, such as an analog network or another digital network. The mobile station 10 is assumed to have at least dual mode capability (e.g., digital TDMA and AMPS) so that it can operate in the different types of networks. It is assumed for the purposes of this invention that the different networks operate in at least two different RF frequency bands (e.g., 1900 MHz and 800 MHz), and the mobile station 10 is therefore a dual band device.

The mobile station 10 of Fig. 1 thus includes a dual band transceiver 13 comprised of a tuneable transmitter 14 and a tuneable receiver 16. A modulator (MOD) 14A and a demodulator (DEMOD) 16A are coupled to the transmitter 14 and the receiver 16, respectively. A controller 18 provides signals to and receives signals from the transceiver 13 via the modulator 14A and the demodulator 16A, respectively. These signals include signalling information in accordance with the air interface standard of the applicable wireless system, and also user speech and/or user generated data. As was indicated above, the transmitter 14, receiver 16, modulator 14A and demodulator 16A are at least dual-mode capable, and may operate with the frequencies, modulation type, access type, etc. of several of the various public networks, and possibly also private networks, in the environment of the mobile station 10.

It is understood that the controller 18 also includes the circuitry required for implementing the audio and logic functions of the mobile station 10. By example, the controller 18 may be comprised of a digital signal processor device, a microprocessor device, and various analog to digital converters, digital to analog converters, and other support circuits. The control and signal processing functions of the mobile station are allocated between these devices according to their respective capabilities.

A user interface includes a conventional earphone or speaker 17, a conventional microphone 19, a display 20, and a user input device, typically a keypad 22, all of which are coupled to the controller 18. The keypad 22 includes the conventional numeric (0-9) and related keys (#,*) 22a, and other keys 22b used for operating the mobile station 10. These other keys 22b may include, by example, a SEND key, various menu scrolling and soft keys, and a PWR key. The mobile station 10 also includes a battery 26 for powering the various circuits that are required to operate the mobile station 10. The mobile station 10 also includes various memories, shown collectively as the memory 24, wherein are stored a plurality of constants and variables that are used by the controller 18 during the operation of the mobile station.

In accordance with this invention, reference is made to Fig. 3 for illustrating a simplified schematic diagram of the dual band transceiver 13 in accordance with the teachings of this invention.

In accordance with the teachings of this invention the dual band transceiver 13 is constructed and operated such that the upper band is implemented as an "add-on converter" to the lower band transceiver. In the lower band operation two upper band mixers M_RX_Hi 40 (receiver) and M_TX_Hi 42 (transmitter) are operated in a reduced power mode (they can be switched off completely). When operating in the upper band, these two mixers 40 and 42 are powered on and are fully operational, and lower band transmit and receive filters B_TX_Lo 44 and B_RX_Lo 46, respectively, are operated as upperband Intermediate Frequency (IF) filters. The bandwidths of these filters are in this case widened as needed.

When operating in the lower band a UHF voltage controlled oscillator (VCO) 48 operates at a frequency RX±RXIF, i.e., the frequency of the channel being received plus/minus the IF frequency, while in upper band operation the UHF VCO 48 operates at (RX±RXIF)/2 . The actual upper band VCO frequency doubling by the cascaded RX mixers 40, 58 and TX mixers 42, 74 implies that the main frequency synthesizer (VCTCXO) 50 is tuned by the channel spacing divided by two (CHNLSPACE/2). The RXIF and TXIF are selected to support full duplex operation, if necessary. In this case ±RXIF±TXIF is equal to the duplex channel spacing.

The other components shown in Fig. 3 include a plurality of phase locked loops (PLLs) 50a, 50b and 50c at the outputs of the VCTCXO 50. PLL 50a feeds a receiver oscillator (RX_OSC) comprised of a VCO 52a that outputs a frequency to a final receiver downconversion mixer 54. Mixer 54 receives an input from a first low band downconversion mixer M_RX_Lo 58 via IF filter 56 (B_RX_IF). A pair of duplexers 60 and 62, each having an antenna 12a and 12b, are used for low band (60, 12a) and high band (62, 12b) operation. In the low band operation the received signal is applied to a first, low band low noise amplifier 64, and thence to the input of B_RX_Lo 46. For high band operation the received signal is applied to a second, high band low noise amplifier 64, and then to an input of a high band receive filter B_RX_Hi 68, before being input to the above-described mixer M_RX_Hi 40.

On the transmit side the PLL 50c provides an input to a transmit oscillator (TX_OSC) VCO 52b which outputs a frequency signal to an IQ modulator 70. The IQ modulator 70 receives Inphase (I) and Quadrature (Q) baseband signals, and modulates the output of the VCO 52b accordingly. The output of the IQ modulator 70 is inputted to a transmit IF filter (B_TX_IF) 72, from where it is provided to a transmit upconversion modulator M_TX_Lo 74. The output of M_TX_Lo 74 is then provided to a transmit filter (B_TX_Lo) 76. For low band operation the filtered output of M_TX_Lo 74 is provided to a low band power amplifier stage 78, and thence to the low band duplexer 60 and antenna 12a. For high band operation the filtered output of M_TX_Lo 74 is instead provided to the above-mentioned M_TX_Hi 42, which upconverts the signal to the high band transmit frequency, and then to high band transmit filter (B_TX_Hi) 80 and a high band power amplifier stage 82. From the high band power amplifier stage 82 the filtered upconverted transmit signal goes to the high band duplexer 62 and antenna 12b.

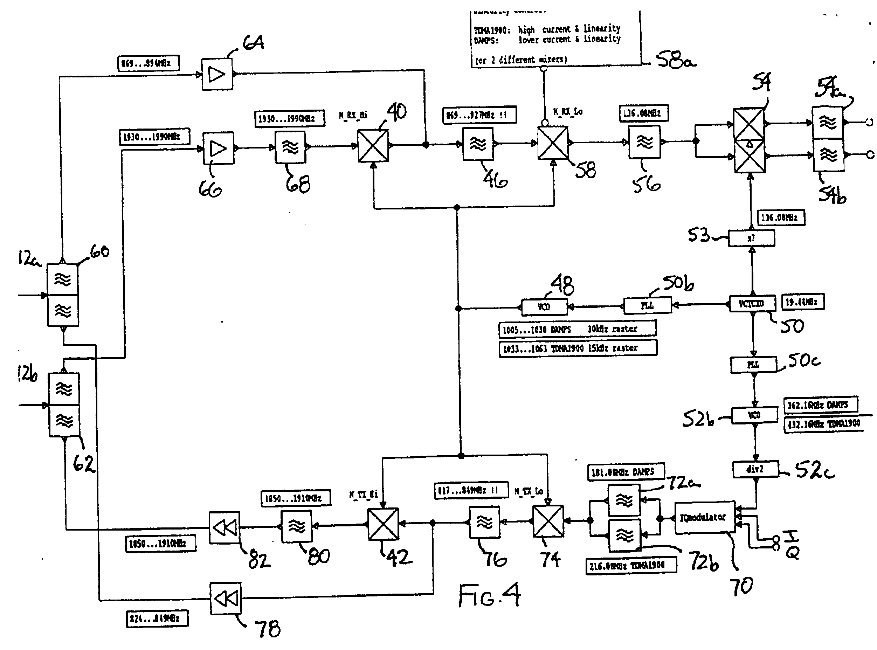

Fig. 4 is a schematic diagram of an embodiment of a digital AMPS(DAMPS)/TDMA1900 transceiver constructed in accordance with the general principles of the embodiment of Fig. 4, and like-functioning components are numbered accordingly.

In this embodiment the VCTVXO 50 can be fixed at 19.44 MHz and the required receiver final IF mixer frequency is achieved by multiplication (7X) in block 53. The raster referred to for the VCO 48 corresponds to the required 30 kHz channel spacing in the lower band. A 15 kHz raster is used for the upper band (TDMA1900), and is multiplied by two to yield the 30 kHz channel spacing. A linearity control block 58a is shown which provides an output to the mixer M_RX_Lo 58. In the TDMA1900 mode the mixer 58 is controlled for higher current and linearity, while in the DAMPS mode the mixer 58 is controlled for lower current and linearity. Alternatively, two separate mixers can be used, each being optimized for its respective band. In this embodiment the B_RX_Lo filter 46 has a passband of 869-927 MHz, and is thus widened by 31 MHz (up). Note also the dual mixers 54 with dual output filters 54a, 54b, as well as the dual B_TX_IF filters 72 (181.08 MHz DAMPS and 216.08 MHz TDMA1900). In this embodiment a divide by 2 block 52c is used to feed the IQ modulator 70.

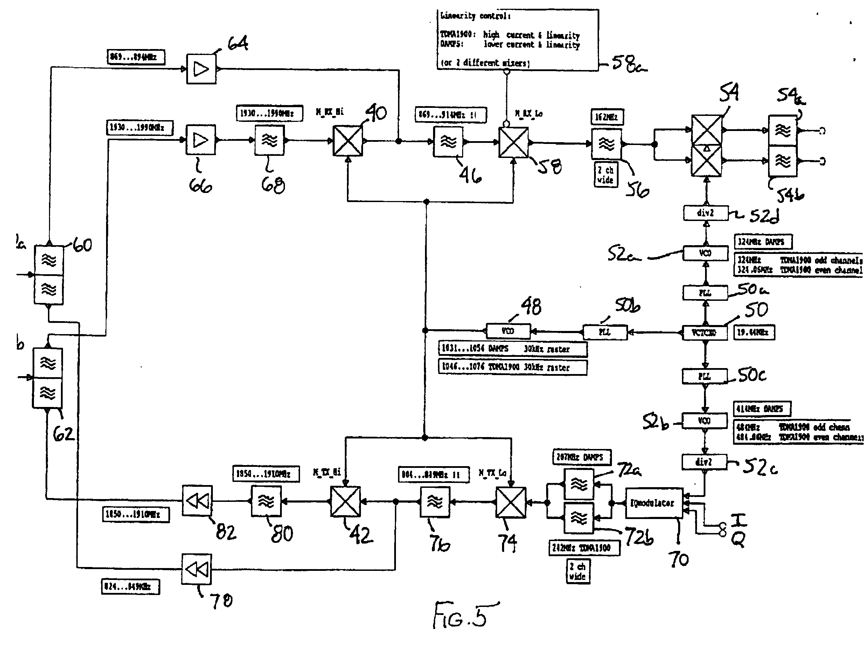

Fig. 5 is a schematic diagram of a second embodiment of the DAMPS/TDMA1900 transceiver. In this embodiment the channel spacing raster for both the upper and the lower bands is 30 kHz, resulting in every other channel being used. A benefit of this approach is that more flexibility is provided in the synthesizer design in terms of noise versus lock-in time. However, the last RX IF filter should be widened, and fine tuning capability is needed in the last downconversion synthesizer. Of course, the illustrated 30 kHz main synthesizer step size is exemplary, and other step sizes could be applied as well. Note that the transmitter VCO 52b operates at 414 MHz for DAMPS, and at 484 MHz for TDMA1900 odd channels and 484.06 MHz for TDMA1900 even channels (if all channels are used), while the receiver VCO 52a operates at 324 MHz for DAMPS, and at 324 MHz for TDMA1900 odd channels and 324.06 MHz for TDMA1900 even channels. The passband of the B_RX_Lo filter 46 is also narrowed from the embodiment of Fig. 4, and is instead 869-927 MHz.

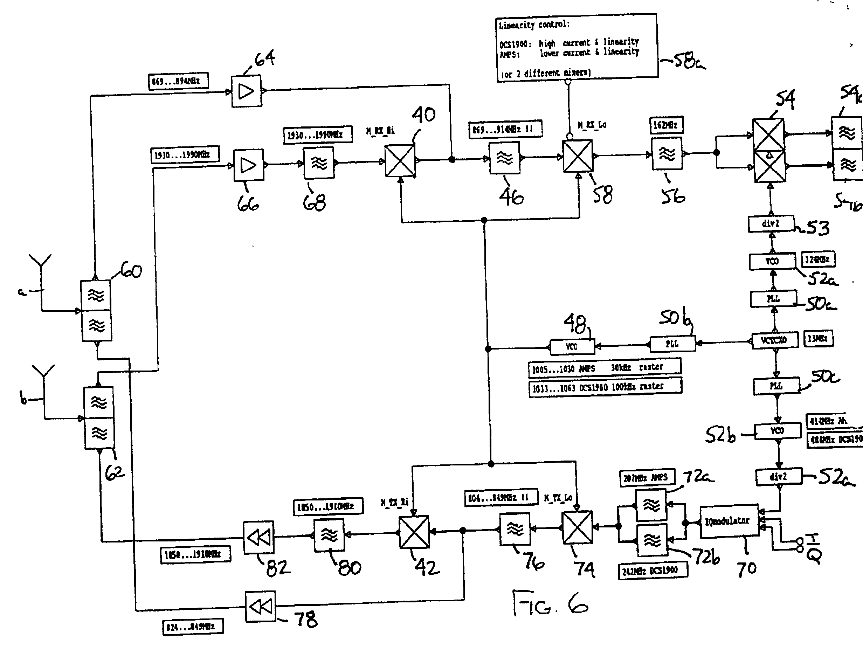

Fig. 6 is a schematic diagram of an AMPS/DCS1900 transceiver embodiment, that is also constructed in accordance with the teachings of this invention, and illustrates the same principles applied to a different system. In this embodiment the DCS1900 channel spacing is 200 kHz. The VCO 48 raster is 100 kHz in the DCS1900 mode, and is multiplied by 2 to obtain the required 200 kHz channel spacing. The low band AMPS channel spacing raster is the conventional 30 kHz value. The transmitter VCO 52b operates at 414 MHz for AMPS, and at 484 MHz for the DCS1900 mode, while the receiver VCO 52a operates at 324 MHz for both AMPS and DCS1900. The passband of the B_RX_Lo filter 46 is 869-914 MHz.

Referring again to Fig. 4, the DAMPS receive (RX) filter 46 is widened 31 MHz up, while the TX filter 76 is widened 7 MHz down. The main synthesizer VCTCXO 50 odd harmonic is employed to obtain the last receiver IF. In Fig. 5 both DAMPS filters (transmit and receive) are selected to be equally wide at 45 MHZ. The need for the upper band half channel spacing in the VCO raster is overcome by adjusting the both the receiver and transmitter injection frequencies by one channel for every second channel.

A single balanced mixer is suitable for use in any of these embodiments as the upper band first mixer 40.

Although described in the context of preferred embodiments, it should be realized that a number of modifications to these teachings may occur to one skilled in the art. By example, the teaching of this invention is not limited for use only with systems constructed and operated in accordance with AMPS and TDMA cellular systems, but other system types, such as CDMA systems, could benefit as well. Furthermore, the use of the two antennas 12a and 12b is not required, if a single antenna having a sufficient bandwidth characteristic is available. Also, and as was indicated above, the various synthesizer step sizes are exemplary of the teachings of this invention, and should not be read in a limiting sense.

Thus, while the invention has been particularly shown and described with respect to preferred and exemplary embodiments thereof, it will be understood by those skilled in the art that changes in form and details may be made therein without departing from the scope and spirit of the invention.

**Claims**

1. A dual band mobile station, comprising a receiver path, said receiver path comprising, for a lower frequency band of operation, a receive filter followed by first and second lower frequency band downconversion mixers, and for a higher frequency band of operation, a first down conversion mixer producing a first intermediate frequency (IF), followed by a first IF filter and second and third downconversion mixers, wherein said lower frequency band receive filter operates as said first IF filter when operating in the upper frequency band, and said first and second lower frequency band downconversion mixers operate as said second and third downconversion mixers.

2. A dual band mobile station as in claim 1, and further comprising a single tuneable voltage controlled oscillator (VCO) that is fed from a fixed frequency master oscillator, wherein an output of said VCO, when operating in said higher frequency band, is fed to both said first down conversion mixer and to said following second downconversion mixer.

3. A dual band mobile station as in claim 1, wherein said lower frequency band comprises about 869 MHz to about 894 MHz, and wherein said higher frequency band comprises about 1930 MHz to about 1990 MHz, and wherein said lower frequency band receive filter has a passband of about 869 MHz to about 914 MHz.

4. A dual band mobile station as in claim 1, wherein said lower frequency band comprises about 869 MHz to about 894 MHz, and wherein said higher frequency band comprises about 1930 MHz to about 1990 MHz, and wherein said lower frequency band receive filter has a passband of about 869 MHz to about 927 MHz.

5. A dual band mobile station as in claim 2, wherein said lower frequency band comprises about 869 MHz to about 894 MHz, and wherein said higher frequency band comprises about 1930 MHz to about 1990 MHz, and wherein when operating in the lower frequency band said VCO is tuneable in frequency steps corresponding to the channel spacing, and when operating in the higher frequency band said VCO is tuneable in frequency steps corresponding to one half the channel spacing.

6. A dual band mobile station as in claim 2, wherein said lower frequency band comprises about 869 MHz to about 894 MHz, and wherein said higher frequency band comprises about 1930 MHz to about 1990 MHz, and wherein when operating in the lower frequency band said VCO is tuneable in frequency steps corresponding to the channel spacing, and when operating in the higher frequency band said VCO is tuneable in frequency steps other than one half the channel spacing.

7. A dual band mobile station as in claim 2, wherein said lower frequency band comprises about 869 MHz to about 894 MHz, and wherein said higher frequency band comprises about 1930 MHz to about 1990 MHz, and wherein when operating in the lower frequency band said VCO is tuneable in frequency steps corresponding to the channel spacing, and when operating in the higher frequency band said VCO is tuneable in frequency steps other than one half channel spacing.

8. A dual band mobile station as in claim 2, wherein said lower frequency band and said higher frequency band are non-overlapping frequency bands, and wherein when operating in the lower frequency band said VCO is tuneable in steps corresponding to the channel spacing, and when operating in the higher frequency band said VCO is tuneable in steps corresponding to one half of the channel spacing.

9. A dual band mobile station as in claim 1, wherein a passband of said receive filter is 45 MHz.

**10.** A dual band mobile station as in claim 1, wherein a passband of said receive filter is broadened upwards by X MHz from 45 MHz.

**11.** A dual band mobile station as in claim 10, wherein X is equal to 31.

**12.** A dual band mobile station as in claim 1, and further comprising a transmitter path, said transmitter path comprising, for the lower frequency transmit band of operation, a first upconversion mixer followed by a lower frequency band transmit filter and a lower frequency band power amplifier, and for the higher frequency transmit band of operation, said lower frequency band transmit filter operates as an IF filter and further comprising a second upconversion mixer having an output coupled to a higher frequency band transmit filter followed by a higher frequency band power amplifier.

**13.** A dual band mobile station as in claim 12, and further comprising a single tuneable voltage controlled oscillator (VCO) that is fed from a fixed frequency master oscillator, wherein an output of said VCO, when operating in said higher frequency band, is fed to both said first upconversion mixer and to said second upconversion mixer.

**14.** A dual band mobile station as in claim 12, wherein said lower frequency transmit band comprises about 824 MHz to about 849 MHz, and wherein said higher frequency transmit band comprises about 1850 MHz to about 1910 MHz, and wherein said lower frequency band transmit filter has a passband of about 804 MHz to about 849 MHz.

**15.** A dual band mobile station as in claim 12, wherein said lower frequency transmit band comprises about 824 MHz to about 849 MHz, and wherein said higher frequency transmit band comprises about 1850 MHz to about 1910 MHz, and wherein said lower frequency band transmit filter has a passband of about 817 MHz to about 849 MHz.

**16.** A dual band mobile station as in claim 13, wherein said lower frequency transmit band comprises about 824 MHz to about 849 MHz, and wherein said higher frequency transmit band comprises about 1850 MHz to about 1910 MHz, and wherein when operating in the lower frequency band said VCO is tuneable in 30 kHz frequency steps, and when operating in the higher frequency band said VCO is tuneable in 15 kHz frequency steps.

**17.** A dual band mobile station as in claim 13, wherein said lower frequency transmit band comprises about 824 MHz to about 849 MHz, and wherein said higher frequency transmit band comprises about 1850 MHz to about 1910 MHz, and wherein when operating in the lower frequency band said VCO is tuneable in 30 kHz frequency steps, and when operating in the higher frequency band said VCO is also tuneable in 30 kHz frequency steps.

**18.** A dual band mobile station as in claim 13, wherein said lower frequency transmit band comprises about 824 MHz to about 849 MHz, and wherein said higher frequency transmit band comprises about 1850 MHz to about 1910 MHz, and wherein when operating in the lower frequency band said VCO is tuneable in 30 KHz frequency steps, and when operating in the higher frequency band said VCO is also tuneable in 100 kHz frequency steps.

**19.** A dual band mobile station as in claim 13, wherein said lower frequency band and said higher frequency band are non-overlapping frequency bands, and wherein when operating in the lower frequency band said VCO is tuneable in steps corresponding to the channel spacing, and when operating in the higher frequency band said VCO is tuneable in steps corresponding to one half of the channel spacing.

**20.** A dual band mobile station as in claim 12, wherein a passband of said lower frequency band transmit filter is 45 MHz.

**21.** A dual band mobile station as in claim 12, wherein a passband of said lower frequency band transmit filter is broadened downwards by X MHz from 45 MHz.

**22.** A dual band mobile station as in claim 21, wherein X is equal to 7.

**23.** A dual band mobile station as in claim 2, wherein said lower frequency band comprises about 869 MHz to about 894 MHz, and wherein said higher frequency band comprises about 1930 MHz to about 1990 MHz, and wherein when operating in the lower frequency band said VCO is tuneable in 30 kHz frequency steps, and when operating in the higher frequency band said VCO is tuneable in 15 kHz frequency steps.

**24.** A dual band mobile station as in claim 2, wherein said lower frequency band comprises about 869 MHz to about 894 MHz, and wherein said higher frequency band comprises about 1930 MHz to about 1990 MHz, and wherein when operating in the lower frequency band said VCO is tuneable in 30 kHz frequency steps, and when operating in the higher frequency band said VCO is also tuneable in 30kHz frequency steps.

**25.** A dual band mobile station as in claim 2, wherein said lower frequency band comprises about 869 MHz to about 894 MHz, and wherein said higher frequency band comprises about 1930 MHz to about 1990 MHz, and wherein when operating in the lower frequency band said VCO is tuneable in 100 kHz frequency steps, and when operating in the higher frequency band said VCO is also tuneable in 100 kHz frequency steps.

**26.** A dual band mobile station as in claim 1, wherein a passband of at least one of said lower and upper band receive filters or at least one of said lower and upper band transmit filters is widened from the required lower band bandwidth to allow duplicate use of the widened filter or filters as the upper band filter or filters.

## FIG. 1

FIG. 2

FIG.3

FIG. 4

FIG. 5

Fig. 6